# EUROPÄISCHE PATENTANMELDUNG

(11) **EP 3 343 308 A1**
(43) Veröffentlichungstag der Anmeldung: **04.07.2018**
(21) Anmeldenummer: 17202292.3
(22) Anmeldetag: 17.11.2017
(51) Int. Cl.: G05D 1/02

(54) **VERFAHREN UND VORRICHTUNG ZUM ERKENNEN EINES RAUMES MITTELS EINES BODENPFLEGEGERÄTS SOWIE BODENPFLEGEGERÄT**

(30) Priorität: 20.12.2016 DE 102016124913
(71) Anmelder: Miele & Cie. KG, 33332 Gütersloh (DE)
(72) Erfinder: Ernst, Holger, 33613 Bielefeld (DE); Kara, Seyfettin, 32139 Spenge (DE); Riedenklau, Eckard, 33647 Bielefeld (DE); Wolf, Cornelius, 33739 Bielefeld (DE)

(57) **Zusammenfassung**

Die Erfindung betrifft ein Verfahren zum Erkennen eines Raumes (104) mittels eines Bodenpflegegeräts (100), wobei das Bodenpflegegerät (100) mit einem Aufnahmegerät (102) zum Aufnehmen von Bildern des Raumes (104) ausgestattet ist. Dabei wird ein von dem Aufnahmegerät (102) aufgenommenes Bild verarbeitet, um zumindest ein in dem Raum (104) befindliches Objekt (106) zu erkennen. Anschließend wird das erkannte Objekt (106) zumindest einer Raumkategorie zugeordnet, um eine Aufenthaltswahrscheinlichkeit zu bestimmen, mit der sich das Bodenpflegegerät (100) in der Raumkategorie aufhält. Schließlich wird die Aufenthaltswahrscheinlichkeit zur Erkennung des Raumes (104) entsprechend ausgewertet.

## Beschreibung

Die Erfindung betrifft ein Verfahren zum Erkennen eines Raumes mittels eines Bodenpflegegeräts, eine entsprechende Vorrichtung, ein entsprechendes Computerprogramm sowie ein Bodenpflegegerät.

Es sind autonome Saugroboter bekannt, die Räume in einer virtuellen Karte abspeichern können und einem Nutzer mittels einer App erlauben können, die Karte mit entsprechenden Bezeichnungen zu versehen.

Vor diesem Hintergrund stellt sich die vorliegende Erfindung die Aufgabe, ein verbessertes Verfahren zum Erkennen eines Raumes mittels eines Bodenpflegegeräts, eine verbesserte Vorrichtung zum Erkennen eines Raumes mittels eines Bodenpflegegeräts sowie ein verbessertes Bodenpflegegerät zu schaffen.

Erfindungsgemäß wird diese Aufgabe durch ein Verfahren, eine Vorrichtung und ein Bodenpflegegerät mit den Merkmalen der Hauptansprüche gelöst. Vorteilhafte Ausgestaltungen und Weiterbildungen der Erfindung ergeben sich aus den nachfolgenden Unteransprüchen.

Es wird ein Verfahren zum Erkennen eines Raumes mittels eines Bodenpflegegeräts vorgestellt, wobei das Bodenpflegegerät mit einem Aufnahmegerät zum Aufnehmen von Bildern des Raumes ausgestattet ist, wobei das Verfahren folgende Schritte umfasst:
Verarbeiten eines von dem Aufnahmegerät aufgenommenen Bildes, um zumindest ein in dem Raum befindliches Objekt zu erkennen;
Zuordnen des Objekts zu zumindest einer Raumkategorie, um eine Aufenthaltswahrscheinlichkeit zu bestimmen, mit der sich das Bodenpflegegerät in der Raumkategorie aufhält; und
Auswerten der Aufenthaltswahrscheinlichkeit, um den Raum zu erkennen.

Unter einem Bodenpflegegerät kann beispielsweise ein Reinigungs-, Saug- oder Rasenroboter verstanden werden. Unter einem Raum kann etwa ein Wohnzimmer, eine Küche, ein Schlafzimmer, ein Flur, eine Rasenfläche oder ein sonstiger begrenzter Raum verstanden werden. Unter einem Aufnahmegerät kann im Allgemeinen ein Bildsensor, beispielsweise ein CCD- oder CMOS-Sensor, verstanden werden. Bei dem Objekt kann es sich beispielsweise um ein Möbelstück oder einen sonstigen im Raum befindlichen Gegenstand handeln. Unter einer Raumkategorie kann eine Kategorie zur Klassifizierung von Räumen, etwa eine Kategorie "Wohnzimmer", "Flur", "Küche", "Schlafzimmer", "Büro" oder "Badezimmer", verstanden werden. Eine Raumkategorie kann beispielsweise durch die Art und Anzahl darin befindlicher Objekte charakterisiert sein. Unter einer Aufenthaltswahrscheinlichkeit kann ein Parameter oder ein Wert verstanden werden, der auch größer als 1 sein kann und/oder der einen Rückschluss darauf gibt, in welchem Raum sich das Bodenpflegegerät befindet. Beispielsweise kann ein solcher Parameter bzw. Wert, der die Aufenthaltswahrscheinlichkeit repräsentiert, für einen oder mehrere Räume ermittelt werden, und durch einen Vergleich der Parameter bzw. Werte für unterschiedliche Räume derjenige Raum erkannt werden, für den der die Aufenthaltswahrscheinlichkeit repräsentierende Parameter bzw. Wert ein vorbestimmtes Kriterium erfüllt, beispielsweise am Größten ist. Unter einer Aufenthaltswahrscheinlichkeit kann je nach Ausführungsform auch ein Wahrscheinlichkeitswert zwischen 0 und 1 oder größer 1 verstanden werden. Die Aufenthaltswahrscheinlichkeit kann normiert oder nicht normiert sein (beispielsweise normiert auf der Basis des Größten ermittelten Wertes für die Aufenthaltswahrscheinlichkeit).

Der hier beschriebene Ansatz beruht auf der Erkenntnis, dass die Erkennung und Segmentierung von Wohnräumen zur Steuerung eines autonomen Bodenpflegegeräts basierend auf einer Objekterkennung und der Ermittlung von Aufenthaltswahrscheinlichkeiten des Bodenpflegegeräts in bestimmten Raumkategorien anhand der erkannten Objekte durchgeführt werden kann. Dadurch können die Raumgrenzen einer aus Sicht des Bodenpflegegeräts hochgradig komplexen und von Wohnung zu Wohnung massiv unterschiedlichen Wohnumgebung, in der das Bodenpflegegerät eingesetzt werden soll, mit verhältnismäßig geringem Rechenaufwand sicher erkannt werden und es kann automatisch bestimmt werden, in welchem Raum sich das Bodenpflegegerät gerade befindet. Beispielsweise können die Raumgrenzen automatisch in einer entsprechenden virtuellen Karte eingetragen werden, sodass weitere Eingaben durch einen Benutzer des Bodenpflegegeräts, etwa die manuelle Eingabe von Raumgrenzen oder von Bezeichnungen für Räume oder Raumgrenzen in der Karte, entfallen oder zumindest auf ein Minimum reduziert werden können. Der wesentliche Vorteil des hier vorgestellten Ansatzes besteht somit darin, dass aus erkannten Objekten automatisch auf Räume und Raumgrenzen geschlossen werden kann und diese Informationen wiederum nutzergerecht aufbereitet zur Verfügung gestellt werden können.

Gemäß einer Ausführungsform kann im Schritt des Verarbeitens das Bild unter Verwendung von Objektdaten aus einer Objektdatenbank verarbeitet werden, um das Objekt zu erkennen. Bei den Objektdaten kann es sich beispielsweise um abgespeicherte Eigenschaften früherer Bilder des Aufnahmegeräts handeln. Unter einer Objektdatenbank kann beispielsweise eine Bildverarbeitungsbibliothek wie OpenCV, SIFT, SURF, FAST, ORB oder BRISK verstanden werden. Die Objektdatenbank kann beispielsweise über einen externen Server bereitgestellt werden, der über eine geeignete Kommunikationsschnittstelle mit dem Bodenpflegegerät gekoppelt sein kann. Beispielsweise kann das Bild durch Vergleichen bestimmter Bildeigenschaften des Bildes mit den Objektdaten unter Verwendung eines geeigneten Bildverarbeitungsalgorithmus auf das Vorhandensein bestimmter Objekte im Bild hin untersucht werden. Durch diese Ausführungsform können Objekte im Bild schnell und zuverlässig erkannt werden.

Gemäß einer weiteren Ausführungsform kann im Schritt des Verarbeitens zumindest eine Bildeigenschaft des Bildes bestimmt werden, die Bildeigenschaft mit den Objektdaten verglichen werden und das Objekt in Abhängigkeit von einer Übereinstimmung zwischen der Bildeigenschaft und den Objektdaten erkannt werden. Unter einer Bildeigenschaft können einfach und schnell zu identifizierende Punkte im Bild wie beispielsweise Kontrastübergänge oder Ecken verstanden werden. Durch diese Ausführungsform kann die Objekterkennung mit besonders hoher Effizienz durchgeführt werden.

Es ist zudem vorteilhaft, wenn im Schritt des Zuordnens die Aufenthaltswahrscheinlichkeit durch Multiplizieren einer Anzahl des Objekts mit einem in Abhängigkeit von der Raumkategorie oder, zusätzlich oder alternativ, einer Art des Objekts gewählten Wahrscheinlichkeitsfaktor bestimmt wird. Unter einem Wahrscheinlichkeitsfaktor kann beispielsweise ein Wert zwischen 0 und 1 verstanden werden. Dadurch kann die Aufenthaltswahrscheinlichkeit schnell und mit geringem Rechenaufwand bestimmt werden.

Des Weiteren kann im Schritt des Verarbeitens das Bild verarbeitet werden, um zumindest ein weiteres in dem Raum befindliches Objekt zu erkennen. Im Schritt des Zuordnens kann das Objekt der Raumkategorie zugeordnet werden, um ein Zwischenergebnis zu erhalten, und das weitere Objekt der Raumkategorie zugeordnet werden, um ein weiteres Zwischenergebnis zu erhalten. Das Zwischenergebnis und das weitere Zwischenergebnis können miteinander addiert werden, um die Aufenthaltswahrscheinlichkeit zu bestimmen. Dadurch kann die Aufenthaltswahrscheinlichkeit des Bodenpflegegeräts bezüglich einer Raumkategorie unter Berücksichtigung unterschiedlicher Objekte und somit besonders genau bestimmt werden.

Gemäß einer weiteren Ausführungsform kann im Schritt des Zuordnens das Objekt zumindest einer weiteren Raumkategorie zugeordnet werden, um eine weitere Aufenthaltswahrscheinlichkeit zu bestimmen, mit der sich das Bodenpflegegerät in der weiteren Raumkategorie aufhält. Im Schritt des Auswertens können die Aufenthaltswahrscheinlichkeit und die weitere Aufenthaltswahrscheinlichkeit ausgewertet werden, um eine maximale Aufenthaltswahrscheinlichkeit zu ermitteln. Dabei kann der Raum anhand einer der maximalen Aufenthaltswahrscheinlichkeit zugeordneten Raumkategorie erkannt werden. Dadurch kann die Genauigkeit des Verfahrens weiter erhöht werden.

Zudem kann das Verfahren einen Schritt des Erstellens einer Zuordnungstabelle unter Verwendung des erkannten Raumes zusätzlich oder alternativ, des erkannten Objekts umfassen. In einem Schritt des Sendens kann die Zuordnungstabelle zur weiteren Verarbeitung an eine Kommunikationsschnittstelle zur Kommunikation des Bodenpflegegeräts mit einem Benutzer des Bodenpflegegeräts oder, zusätzlich oder alternativ, einer externen Datenverarbeitungseinrichtung gesendet werden. Bei der Kommunikationsschnittstelle kann es sich je nach Ausführungsform um eine Schnittstelle zur drahtlosen oder drahtgebundenen Kommunikation handeln. Bei der externen Datenverarbeitungseinrichtung kann es sich beispielsweise um einen zentralen Datenserver oder einen sonstigen geräteexternen Rechner handeln. Diese Ausführungsform ermöglicht eine einfache externe Weiterverarbeitung der Zuordnungstabelle.

Dabei kann in einem Schritt des Einlesens eine Benutzereingabe oder, zusätzlich oder alternativ, eine Aktualisierungsinformation über die Kommunikationsschnittstelle eingelesen werden. In einem Schritt des Aktualisierens kann die Zuordnungstabelle unter Verwendung der Benutzereingabe bzw. der Aktualisierungsinformation aktualisiert werden. Durch diese Ausführungsform kann die Zuordnungstabelle automatisch oder manuell aktualisiert oder korrigiert werden.

Dieses Verfahren kann beispielsweise in Software oder Hardware oder in einer Mischform aus Software und Hardware, beispielsweise in einer Vorrichtung, implementiert sein.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Je nach Ausführungsform kann die Vorrichtung als Komponente des Bodenpflegegeräts oder als Komponente einer über eine geeignete Kommunikationsschnittstelle mit dem Bodenpflegegerät gekoppelten externen Einheit realisiert sein. In diesem Fall kann die Verarbeitung der durch das Bodenpflegegerät aufgenommenen Bilder zur Raum- oder Objekterkennung beispielsweise vollständig außerhalb des Bodenpflegegeräts erfolgen.

Der hier vorgestellte Ansatz schafft zudem ein Bodenpflegegerät mit folgenden Merkmalen:
einem Aufnahmegerät zum Aufnehmen von Bildern eines Raumes; und
einer Vorrichtung gemäß einer vorstehenden Ausführungsform.

Ein solches Bodenpflegegerät bietet den Vorteil einer vollständig automatischen und genauen Erkennung von Raumgrenzen in einer Wohnumgebung.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ein Ausführungsbeispiel der Erfindung ist in den Zeichnungen rein schematisch dargestellt und wird nachfolgend näher beschrieben. Es zeigt
- Figur 1: eine schematische Darstellung eines Bodenpflegegeräts gemäß einem Ausführungsbeispiel;
- Figur 2: eine schematische Darstellung eines Bildes, aufgenommen durch ein Bodenpflegegerät gemäß einem Ausführungsbeispiel;
- Figur 3: eine schematische Darstellung eines annotierten Bildes aus Figur 2;
- Figur 4: eine schematische Darstellung einer Vorrichtung gemäß einem Ausführungsbeispiel; und
- Figur 5: ein Ablaufdiagramm eines Verfahrens gemäß einem Ausführungsbeispiel.

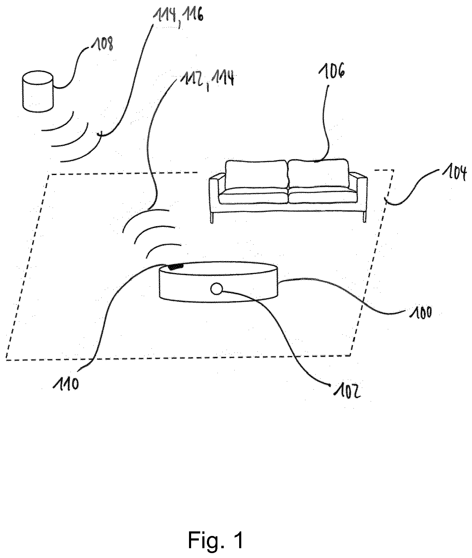

Figur 1 zeigt eine schematische Darstellung eines Bodenpflegegeräts 100 gemäß einem Ausführungsbeispiel, hier eines Saugroboters. Das Bodenpflegegerät 100 weist ein Aufnahmegerät 102 auf, das ausgebildet ist, um Bilder eines Raumes 104, in dem sich das Bodenpflegegerät 100 gerade befindet, aufzunehmen. Gemäß diesem Ausführungsbeispiel ist das Bodenpflegegerät 100 ausgebildet, um die von dem Aufnahmegerät 102 aufgenommenen Bilder zur Erkennung eines im Raum 104 befindlichen Objekts 106 zu verarbeiten, in Figur 1 beispielhaft als Sofa dargestellt. Weiterhin ist das Bodenpflegegerät 100 ausgebildet, um anhand des erkannten Objektes 106 eine Aufenthaltswahrscheinlichkeit zu bestimmen, mit der sich das Bodenpflegegerät 100 in einer bestimmten Raumkategorie wie beispielsweise einem Wohnzimmer, einem Schlafzimmer, einer Küche oder einem Bad aufhält. Beispielsweise ermittelt das Bodenpflegegerät 100 in Figur 1 aufgrund der Art des Objektes 106 eine verhältnismäßig hohe Aufenthaltswahrscheinlichkeit für einen Aufenthalt des Bodenpflegegeräts 100 in der Raumkategorie "Wohnzimmer". Somit erkennt das Bodenpflegegerät 100 den Raum 104 automatisch als Wohnzimmer.

Gemäß einem alternativen Ausführungsbeispiel erfolgt die Verarbeitung der von dem Aufnahmegerät 102 aufgenommenen Bilder oder auch die auf Basis der Bilder durchgeführte Objekt- und Raumerkennung nicht durch das Bodenpflegegerät 100 selbst, sondern durch eine externe Datenverarbeitungseinrichtung 108, etwa einem Datenserver, wobei die Datenverarbeitungseinrichtung 108 von dem Bodenpflegegerät 100 über eine geeignete Kommunikationsschnittstelle 110, hier beispielhaft zur drahtlosen Kommunikation, entsprechende Bilddaten 112 von dem Bodenpflegegerät 100 empfängt und entsprechende Erkennungsdaten 114 als Ergebnis der Objekt- oder Raumerkennung an das Bodenpflegegerät 100 zurücksendet. Die Erkennungsdaten 114 repräsentieren beispielsweise eine unter Verwendung des erkannten Raumes 104 oder des erkannten Objektes 106 erstellte Zuordnungstabelle oder virtuelle Karte einer den Raum 104 umfassenden Wohnumgebung.

Erfolgt die Objekt- oder Raumerkennung durch das Bodenpflegegerät 100 selbst, so überträgt beispielsweise umgekehrt das Bodenpflegegerät 100 die Erkennungsdaten 114 an die Datenverarbeitungseinrichtung 108, damit diese durch die Datenverarbeitungseinrichtung 108 zentral abgespeichert oder weiterverarbeitet werden können.

Gemäß einem weiteren Ausführungsbeispiel ist die Datenverarbeitungseinrichtung 108 ausgebildet, um eine Aktualisierungsinformation 116 bereitzustellen und diese über die Kommunikationsschnittstelle 110 an das Bodenpflegegerät 100 zu senden. Das Bodenpflegegerät 100 verwendet die Aktualisierungsinformation 116, um die Erkennungsdaten 114, insbesondere beispielsweise die Zuordnungstabelle, zu aktualisieren, etwa um erkannte Räume automatisch mit geeigneten Bezeichnungen zu versehen oder Korrekturen vorzunehmen.

Je nach Ausführungsbeispiel dient die Kommunikationsschnittstelle 110 zusätzlich oder alternativ zum Austausch von Informationen mit einem Benutzer des Bodenpflegegeräts 100, etwa mittels eines über die Kommunikationsschnittstelle 110 mit dem Bodenpflegegerät 100 gekoppelten Smartphones oder Tablets und einer entsprechenden Applikation, sodass vom Benutzer getätigte Benutzereingaben von dem Bodenpflegegerät 100 empfangen und unter Verwendung der Erkennungsdaten 114 beispielsweise zur Aktualisierung der Zuordnungstabelle verarbeitet werden können. Optional ist das Bodenpflegegerät 100 mit einem Eingabegerät wie etwa einem Touchscreen zur direkten manuellen Eingabe von Informationen bezüglich des erkannten Raumes 104 oder des erkannten Objektes 106 am Bodenpflegegerät 100 ausgestattet.

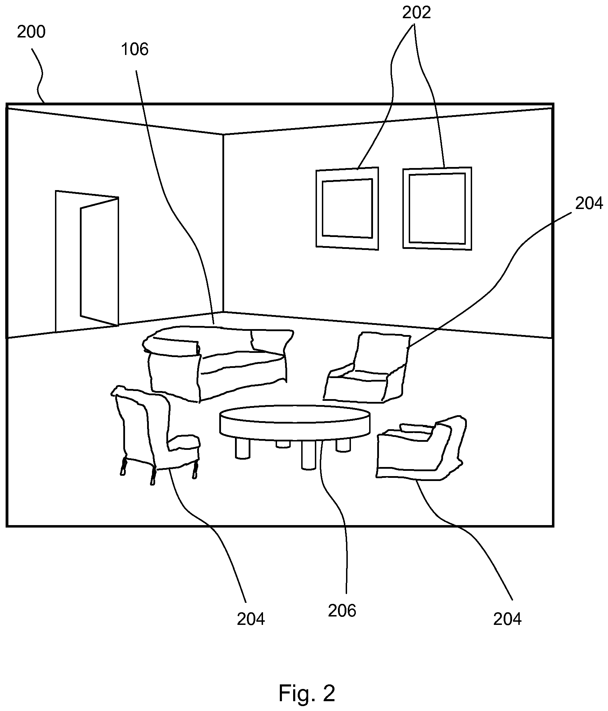

Figur 2 zeigt eine schematische Darstellung eines Bildes 200, aufgenommen durch ein Bodenpflegegerät gemäß einem Ausführungsbeispiel, etwa eines Bodenpflegegeräts, wie es vorangehend anhand von Figur 1 beschrieben ist. Gezeigt ist ein durch das Aufnahmegerät des Bodenpflegegeräts aufgenommenes Ausgangsbild eines Wohnzimmers zur weiteren Bildverarbeitung. Das Bild 200 zeigt beispielhaft das Sofa 106, zwei Bilder 202, drei Sessel 204 sowie einen Tisch 206. Bei den genannten Möbelstücken handelt es sich um Objekte, die durch eine geeignete Bildverarbeitung durch das Bodenpflegegerät, etwa mithilfe von Objektdaten aus einer Objektdatenbank, als solche erkannt werden können.

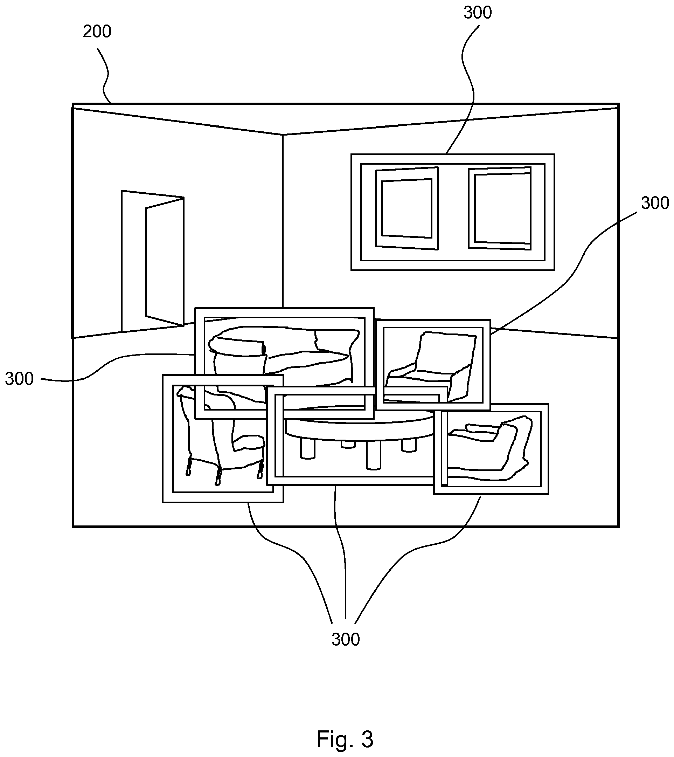

Figur 3 zeigt eine schematische Darstellung eines annotierten Bildes 200 aus Figur 2. Gezeigt sind durch einen Klassifikationsalgorithmus des Bodenpflegegeräts automatisch mit verschiedenen Objekteigenschaften annotierte Bildbereiche 300. Bei den Objekteigenschaften handelt es sich beispielsweise um einen Namen, eine Größe oder eine Position zumindest eines innerhalb des jeweiligen Bildbereichs 300 identifizierten Objekts. Beispielhaft sind die Bildbereiche 300 in Figur 3 nur mit dem Namen der jeweils darin identifizierten Objekte annotiert ("Bilder", "Sofa", "Sessel", "Tisch").

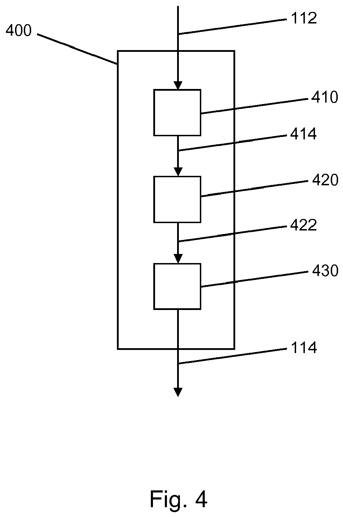

Figur 4 zeigt eine schematische Darstellung einer Vorrichtung 400 gemäß einem Ausführungsbeispiel. Die Vorrichtung 400 zum Erkennen eines Raumes mittels eines Bodenpflegegeräts kann beispielsweise als Komponente eines Bodenpflegegeräts oder einer Datenverarbeitungseinrichtung, wie sie vorangehend anhand der Figuren 1 bis 3 beschrieben sind, realisiert sein. Die Vorrichtung 400 umfasst eine Verarbeitungseinheit 410 zum Verarbeiten der von dem Aufnahmegerät des Bodenpflegegeräts bereitgestellten Bilddaten 112, die ein Bild des Raumes, in dem sich das Bodenpflegegerät gerade befindet, repräsentieren. Hierbei führt die Verarbeitungseinheit 410 unter Verwendung der Bilddaten 112 eine Objekterkennung durch, um zumindest ein in dem Bild vorhandenes Objekt wie etwa ein Möbelstück oder einen sonstigen Gegenstand in dem zu erkennenden Raum zu identifizieren. Als Ergebnis des Verarbeitens gibt die Verarbeitungseinheit 410 eine das erkannte Objekt repräsentierende Objektinformation 414 an eine Zuordnungseinheit 420 weiter, die ausgebildet ist, um das Objekt unter Verwendung der Objektinformation 414 einer Raumkategorie, etwa der Raumkategorie "Wohnzimmer", "Schlafzimmer", "Küche", "Bad" oder "Flur", zuzuordnen. Im Rahmen dieser Zuordnung bestimmt die Zuordnungseinheit 420 die Aufenthaltswahrscheinlichkeit, mit der sich das Bodenpflegegerät in der betreffenden Raumkategorie befindet. Als Ergebnis des Zuordnens und Bestimmens der Aufenthaltswahrscheinlichkeit gibt die Zuordnungseinheit 420 einen die Aufenthaltswahrscheinlichkeit repräsentierenden Aufenthaltswahrscheinlichkeitswert 422 an eine Auswerteeinheit 430 der Vorrichtung 400 aus. Die Auswerteeinheit 430 ist ausgebildet, um die Aufenthaltswahrscheinlichkeit unter Verwendung des Aufenthaltswahrscheinlichkeitswertes 422 zur Erkennung des Raumes auszuwerten. Als Ergebnis dieser Raumerkennung gibt die Auswerteeinheit 430 die den erkannten Raum repräsentierenden Erkennungsdaten 114 aus.

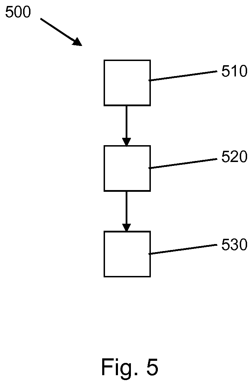

Figur 5 zeigt ein Ablaufdiagramm eines Verfahrens 500 gemäß einem Ausführungsbeispiel. Das Verfahren 500 kann beispielsweise mittels einer Vorrichtung, wie sie vorangehend anhand von Figur 4 beschrieben ist, durchgeführt werden. Dabei wird in einem Schritt 510 das von dem Aufnahmegerät aufgenommene Bild verarbeitet, um im Raum befindliche Objekte zu erkennen. In einem Schritt 520 erfolgt die Zuordnung der erkannten Objekte zu zumindest einer Raumkategorie, wobei die Aufenthaltswahrscheinlichkeit bestimmt wird, mit der sich das Bodenpflegegerät in der betreffenden Raumkategorie aufhält. Des Weiteren wird in einem Schritt 530 die Aufenthaltswahrscheinlichkeit ausgewertet, um den Raum zu erkennen.

Nachfolgend werden verschiedene Ausführungsbeispiele des hier beschriebenen Ansatzes nochmals mit anderen Worten beschrieben.

Je nach Ausführungsbeispiel erfolgt die Objekterkennung im Schritt 520 des in Figur 5 gezeigten Verfahrens 500 entweder mithilfe neuronaler Netze oder, zusätzlich oder alternativ, mithilfe von Bildverarbeitungsalgorithmen, die ausgebildet sind, um Objekte im Kamerabild des Bodenpflegegeräts anhand bestimmter Eigenschaften als eine Art Fingerabdruck in einem Bild in einer Objektdatenbank wiederzuerkennen und so Objekten zuzuordnen. Grundsätzlich funktionieren die Bildverarbeitungsalgorithmen nach folgendem Prinzip. Zunächst werden die jeweiligen Eigenschaften der aufgenommenen Bilder in der Objektdatenbank bestimmt und abgespeichert. Fortlaufend wird das Kamerabild des Bodenpflegegeräts auf die gleichen Eigenschaften untersucht und es werden die Eigenschaften mit den in der Objektdatenbank abgespeicherten Eigenschaften verglichen. Wird hier ein Satz von Eigenschaften mit hinreichender Übereinstimmung gefunden, so handelt es sich wahrscheinlich um das jeweilige Objekt.

Die Bildverarbeitungsalgorithmen unterscheiden sich hauptsächlich in den Bildeigenschaften, die sie berechnen. Beispielsweise identifizieren die Bildverarbeitungsalgorithmen Punkte in den Bildern, die schnell wiederzuerkennen sind, etwa Kontrastübergänge oder Ecken. Diese Punkte werden in einer skalierungs- und rotationsunabhängigen Form zur besseren Vergleichbarkeit gespeichert. Derartige Algorithmen werden beispielsweise von der Bildverarbeitungsbibliothek OpenCV angeboten (vgl. http://docs.opencv.org/master/da/d9b/group_features2d.html und http://docs.opencv.org/master/d5/d51/group_features2d_main.html). Weitere Algorithmen sind SIFT, SURF, FAST, ORB und BRISK. Vor allem ORB liefert bei vergleichsweise schneller Berechenbarkeit brauchbare Ergebnisse in der Objekterkennung. Die Objektdatenbank, die die einzelnen Bildeigenschaften der Objekte enthält, sollte fortlaufend gepflegt werden, gegebenenfalls durch eine externe Datenverarbeitungseinrichtung, wie sie etwa vorangehend anhand von Figur 1 beschrieben ist. Hierbei ist insbesondere eine ausgelagerte Auswertung der Bildeigenschaften durch die Datenverarbeitungseinrichtung vorteilhaft.

Im Gegensatz zu neuronalen Netzen werden die zu erkennenden Objekte mithilfe der Bildverarbeitungsalgorithmen explizit anhand ihrer visuellen Eigenschaften erkannt und in diesem Sinne nicht "gelernt". Deep-Learning-Verfahren hingegen lernen mit der Zeit eher Objektkonzepte statt Objekteigenschaften und generalisieren daher auch gut, sofern hinreichend gute Trainingsdaten verwendet werden.

Mit den Objektinformationen ist das Bodenpflegegerät schließlich in der Lage, abzuleiten, in welchem Raum es sich gerade befindet. Wurden beispielsweise Sessel, Sofa, Couchtisch und ein Regal mit TV-Gerät erkannt, so kann mit hoher Wahrscheinlichkeit abgeleitet werden, dass sich das Bodenpflegegerät in einem Wohnzimmer befindet. Analog wird beispielsweise bei Erkennung eines Betts und eines Kleiderschranks auf ein Schlafzimmer geschlossen. Das Rückschließen vom Vorhandensein bestimmter Möbel oder Gegenstände auf einen jeweiligen Raum erfolgt etwa mithilfe statistischer Methoden. Jedes Objekt, das in einer Region identifiziert wird, erhöht die Wahrscheinlichkeit, dass sich das Bodenpflegegerät in potenziell zu den Objekten gehörenden Räumen befindet. Der Raum oder die Raumkategorie mit der höchsten Wahrscheinlichkeit wird schließlich als Annahme übernommen und dem Benutzer als Vorschlag angeboten. Der Benutzer hat dann beispielsweise die Möglichkeit, den Vorschlag zu übernehmen oder zu verwerfen. Diese Zusammenhänge können etwa mit einem Multi-Lagen-Perzeptron (MLP) gelernt werden, das zur stetigen Verbesserung regelmäßig als Aktualisierung auf das Bodenpflegegerät geladen wird.

Nachfolgend wird ein beispielhafter Ablauf einer Zuordnung zur Bestimmung der Aufenthaltswahrscheinlichkeit beschrieben.

Hierbei dienen die Figuren 2 und 3 zur Verdeutlichung der folgenden Zuordnungstabelle. Figur 2 skizziert ein beispielhaftes Kamerabild 200 eines Wohnzimmers, das vom Bodenpflegegerät aufgenommen wurde. Mithilfe der Objekterkennung entsteht das annotierte Bild 200 aus Figur 3. Mit der Anzahl der erkannten Objekte pro Kategorie wird nun anhand der Zuordnungstabelle die Aufenthaltswahrscheinlichkeit bestimmt, mit der sich das Bodenpflegegerät in dem durch das Bild 200 repräsentierten Raum aufhält.

Direkt unter den Raumbezeichnungen der Zuordnungstabelle sind die aufsummierten, nicht normierten Aufenthaltswahrscheinlichkeiten aufgelistet, mit denen sich das Bodenpflegegerät in der jeweiligen Raumkategorie befindet. In diesem Beispiel ist die Aufenthaltswahrscheinlichkeit für die Raumkategorie "Wohnzimmer" am größten. Die Aufenthaltswahrscheinlichkeit je Raumkategorie errechnet sich aus der Wahrscheinlichkeit, mit der ein Objekt in einer bestimmten Raumkategorie zu finden ist (erste Spalte je Raumkategorie), multipliziert mit der Anzahl der erkannten Objekte (zweite Spalte je Raumkategorie). Die zweite Spalte zeigt die Einzelergebnisse dieser Multiplikation. Diese Einzelergebnisse werden miteinander addiert und ergeben so die Aufenthaltswahrscheinlichkeit der betreffenden Raumkategorie. Eine andere Kombination erkannter Objekte würde zu anderen Wahrscheinlichkeiten führen. So würde beispielsweise ein Bild mit 1 Esstisch, 1 Bild, 3 Stühlen und 1 Backofen eine maximale Wahrscheinlichkeitssumme von 5,05 für die Raumkategorie "Küche" ergeben.

Die Zuordnungstabelle kann je nach Ausführungsbeispiel händisch oder mittels eines MLP in ähnlicher Weise erstellt werden. Bei Verwendung eines MLP werden die hier explizit angegebenen Wahrscheinlichkeiten der Objekte beim Training implizit in den Gewichten codiert.

| | **Raum:** | **Wohnzimmer** | | **Flur** | | **Küche** | | **Schlafzimmer** | | **Büro** | | **Badezimmer** | | ... |
|---|---|---|---|---|---|---|---|---|---|---|---|---|---|---|
| **Objekt:** | **erkannt** | **7,15** | | **2,87** | | **1,86** | | **1,51** | | **1,09** | | **0,38** | | ... |
| Sessel | 2 | *0,90* | 1,80 | *0,10* | 0,18 | *0,20* | 0,04 | *0,75* | 0,03 | *0,60* | 0,02 | *0,00* | 0,00 | ... |
| Sofa | 1 | *0,90* | 0,90 | *0,05* | *0,05* | *0,30* | 0,01 | *0,20* | 0,00 | *0,40* | 0,00 | *0,00* | 0,00 | ... |
| Couchtisch | 1 | *0,80* | 0,80 | *0,20* | 0,16 | *0,20* | 0,03 | *0,20* | 0,01 | *0,30* | 0,00 | *0,00* | 0,00 | ... |
| Esstisch | 0 | *0,75* | 0,00 | *0,10* | 0,00 | *0,80* | 0,00 | *0,10* | 0,00 | *0,20* | 0,00 | *0,00* | 0,00 | ... |
| Bilder | 1 | *0,75* | *0,75* | *0,75* | 0,56 | *0,60* | 0,34 | *0,75* | 0,25 | *0,50* | 0,13 | *0,60* | 0,08 | ... |
| Stuhl | 1 | *0,80* | 0,80 | *0,30* | 0,24 | *0,90* | 0,22 | *0,60* | 0,13 | *0,55* | 0,07 | *0,60* | 0,04 | ... |
| Bürostuhl | 0 | *0,40* | 0,00 | *0,10* | 0,00 | *0,20* | 0,00 | *0,40* | 0,00 | *0,90* | 0,00 | *0,00* | 0,00 | ... |
| Schreibtisch | 0 | *0,40* | 0,00 | *0,10* | 0,00 | *0,10* | 0,00 | *0,30* | 0,00 | *0,90* | 0,00 | *0,00* | 0,00 | ... |
| TV-Gerät | 0 | *0,80* | 0,00 | *0,05* | 0,00 | *0,30* | 0,00 | *0,40* | 0,00 | *0,30* | 0,00 | *0,20* | 0,00 | ... |
| Backofen | 0 | *0,05* | 0,00 | *0,00* | 0,00 | *0,95* | 0,00 | *0,00* | 0,00 | *0,00* | 0,00 | *0,00* | 0,00 | ... |
| Lampe | 2 | *0,90* | 1,80 | *0,90* | 1,62 | *0,75* | 1,22 | *0,90* | 1,09 | *0,80* | 0,87 | *0,30* | 0,26 | ... |
| Kamin | 1 | *0,30* | 0,30 | *0,20* | 0,06 | *0,10* | 0,01 | *0,00* | 0,00 | *0,00* | 0,00 | *0,00* | 0,00 | ... |
| Toilette | 0 | *0,00* | 0,00 | *0,00* | 0,00 | *0,00* | 0,00 | *0,00* | 0,00 | *0,00* | 0,00 | *0,95* | 0,00 | ... |
| Waschbecken | 0 | *0,00* | 0,00 | 0,00 | 0,00 | *0,00* | 0,00 | *0,00* | 0,00 | *0,00* | 0,00 | *1,00* | 0,00 | ... |
| Garderobe | 0 | *0,10* | 0,00 | *0,90* | 0,00 | *0,00* | 0,00 | *0,60* | 0,00 | *0,40* | 0,00 | *0,10* | 0,00 | ... |
| ... | 0 | ... | ... | ... | ... | ... | ... | ... | ... | ... | ... | ... | ... | ... |

Solche und neue Zuordnungen zwischen Objekten und Räumen werden beispielsweise interaktiv durch die Benutzer gesammelt, extern redaktionell aufbereitet, im MLP trainiert und als verbesserte Datengrundlage mit neuen Geräten oder über Updates über das Internet an (neue) Benutzer verteilt, um den Korrekturanteil, den die Benutzer eventuell noch leisten sollten, weiter zu senken.

Der Vorteil einer derartigen Raumerkennung besteht darin, dass die Erkennungsdaten, etwa die Namen erkannter Objekte oder Räume, automatisch in einer entsprechenden Karte verzeichnet und dem Benutzer präsentiert werden können. Dieser kann dann beispielsweise bei einer Fehlklassifikation eigenständig Änderungen vornehmen.

Die automatisch erhobenen Erkennungsdaten können in weiteren Szenarien weiteren Mehrwert generieren. Beispielsweise können die Erkennungsdaten im Rahmen neuartiger Bedienkonzepte, etwa mittels natürlicher Sprache, genutzt werden, ebenso wie zur Aufbereitung statistischer Informationen über die Reinigungsleistung des Bodenpflegegeräts in den jeweiligen Räumen.

## Patentansprüche

1. Verfahren (500) zum Erkennen eines Raumes (104) mittels eines Bodenpflegegeräts (100), wobei das Bodenpflegegerät (100) mit einem Aufnahmegerät (102) zum Aufnehmen von Bildern des Raumes (104) ausgestattet ist, wobei das Verfahren (500) folgende Schritte umfasst:
Verarbeiten (510) eines von dem Aufnahmegerät (102) aufgenommenen Bildes, um zumindest ein in dem Raum (104) befindliches Objekt (106; 202, 204, 206) zu erkennen;
Zuordnen (520) des Objekts (106; 202, 204, 206) zu zumindest einer Raumkategorie, um eine Aufenthaltswahrscheinlichkeit zu bestimmen, mit der sich das Bodenpflegegerät (100) in der Raumkategorie aufhält; und
Auswerten (530) der Aufenthaltswahrscheinlichkeit, um den Raum (104) zu erkennen.

2. Verfahren (500) gemäß Anspruch 1, bei dem im Schritt des Verarbeitens (510) das Bild unter Verwendung von Objektdaten aus einer Objektdatenbank verarbeitet wird, um das Objekt (106; 202, 204, 206) zu erkennen.

3. Verfahren (500) gemäß Anspruch 2, bei dem im Schritt des Verarbeitens (510) zumindest eine Bildeigenschaft des Bildes bestimmt wird, die Bildeigenschaft mit den Objektdaten verglichen wird und das Objekt (106; 202, 204, 206) in Abhängigkeit von einer Übereinstimmung zwischen der Bildeigenschaft und den Objektdaten erkannt wird.

4. Verfahren (500) gemäß einem der vorangegangenen Ansprüche, bei dem im Schritt des Zuordnens (520) die Aufenthaltswahrscheinlichkeit durch Multiplizieren einer Anzahl des Objekts (106; 202, 204, 206) mit einem in Abhängigkeit von der Raumkategorie und/oder einer Art des Objekts (106; 202, 204, 206) gewählten Wahrscheinlichkeitsfaktor bestimmt wird.

5. Verfahren (500) gemäß einem der vorangegangenen Ansprüche, bei dem im Schritt des Verarbeitens (510) das Bild verarbeitet wird, um zumindest ein weiteres in dem Raum (104) befindliches Objekt (202, 204, 206) zu erkennen, wobei im Schritt des Zuordnens (520) das Objekt (106) der Raumkategorie zugeordnet wird, um ein Zwischenergebnis zu erhalten, und das weitere Objekt (202, 204, 206) der Raumkategorie zugeordnet wird, um ein weiteres Zwischenergebnis zu erhalten, wobei das Zwischenergebnis und das weitere Zwischenergebnis miteinander addiert werden, um die Aufenthaltswahrscheinlichkeit zu bestimmen.

6. Verfahren (500) gemäß einem der vorangegangenen Ansprüche, bei dem im Schritt des Zuordnens (520) das Objekt (106; 202, 204, 206) zumindest einer weiteren Raumkategorie zugeordnet wird, um eine weitere Aufenthaltswahrscheinlichkeit zu bestimmen, mit der sich das Bodenpflegegerät (100) in der weiteren Raumkategorie aufhält, wobei im Schritt des Auswertens (530) die Aufenthaltswahrscheinlichkeit und die weitere Aufenthaltswahrscheinlichkeit ausgewertet werden, um eine maximale Aufenthaltswahrscheinlichkeit zu ermitteln, wobei der Raum (104) anhand einer der maximalen Aufenthaltswahrscheinlichkeit zugeordneten Raumkategorie erkannt wird.

7. Verfahren (500) gemäß einem der vorangegangenen Ansprüche, mit einem Schritt des Erstellens einer Zuordnungstabelle unter Verwendung des erkannten Raumes (104) und/oder des erkannten Objekts (106; 202, 204, 206), wobei in einem Schritt des Sendens die Zuordnungstabelle zur weiteren Verarbeitung an eine Kommunikationsschnittstelle (110) zur Kommunikation des Bodenpflegegeräts (100) mit einem Benutzer des Bodenpflegegeräts (100) und/oder einer externen Datenverarbeitungseinrichtung (108) gesendet wird.

8. Verfahren (500) gemäß Anspruch 7, mit einem Schritt des Einlesens einer Benutzereingabe und/oder einer Aktualisierungsinformation (116) über die Kommunikationsschnittstelle (110), wobei in einem Schritt des Aktualisierens die Zuordnungstabelle unter Verwendung der Benutzereingabe und/oder der Aktualisierungsinformation (116) aktualisiert wird.

9. Vorrichtung (400) mit Einheiten (410, 420, 430), die ausgebildet sind, um das Verfahren (500) gemäß einem der vorangegangenen Ansprüche auszuführen und/oder anzusteuern.

10. Bodenpflegegerät (100) mit folgenden Merkmalen:
einem Aufnahmegerät (102) zum Aufnehmen von Bildern eines Raumes (104); und
einer Vorrichtung (400) gemäß Anspruch 9.

11. Computerprogramm, das ausgebildet ist, um das Verfahren (500) gemäß einem der Ansprüche 1 bis 8 auszuführen und/oder anzusteuern.

12. Maschinenlesbares Speichermedium, auf dem das Computerprogramm nach Anspruch 11 gespeichert ist.
